# EUROPEAN PATENT SPECIFICATION

(11) **EP 2 133 818 B1**
(45) Date of publication and mention of the grant of the patent: **04.05.2016**
(21) Application number: 09161153.3
(22) Date of filing: 26.05.2009
(51) Int. Cl.: G06K 9/00

(54) **Method for using image information in portable terminal**
Verfahren zur Verwendung von Bildinformation in einem tragbaren Endgerät
Procédé pour l'utilisation d'informations d'image dans un terminal portable

(30) Priority: 10.06.2008 KR 20080054021
(43) Date of publication of application: 16.12.2009
(73) Proprietor: Samsung Electronics Co., Ltd., Suwon-si, Gyeonggi-do, 443-742 (KR)
(72) Inventor: Woo, Young June, Suwon-si, Gyeonggi-do (KR); Kang, Myung Ji, Suwon-si, Gyeonggi-do (KR); Kwon, Yong, Suwon-si, Gyeonggi-do (KR); Eun, Jin Pyo, Suwon-si, Gyeonggi-do (KR); Lee, Sin Jae, Suwon-si, Gyeonggi-do (KR); Yang, Myung Kyu, Suwon-si, Gyeonggi-do (KR)
(74) Representative: Birchenough, Lewis

(56) References cited:
- EP-A- 1 229 496
- EP-A- 1 432 226
- EP-A- 1 703 442
- EP-A- 1 860 853
- EP-A- 1 916 588
- EP-A2- 0 944 019
- JP-A- 2006 165 821
- US-A1- 2004 207 722

## Description

### BACKGROUND OF THE INVENTION

### 1. Field of the Invention

The present invention relates to a method for using image information in a portable terminal.

### 2. Description of the Related Art

As science and technology have developed, portable terminals now include a variety of functions, such as communication, a camera function, digital multimedia broadcasting (DMB), etc. These functions generate various data in portable terminals.

For example, if a portable terminal includes a camera that can perform face recognition, it can recognize a face area from an image taken by the camera and generates image information corresponding to the recognized face area.

However, data and pieces of image information, stored in the portable terminal, are used only to allow the portable terminal user to identify their types but are not used to support other functions. Methods are required so that the data and image information stored in the portable terminal can be used for a variety of functions.

US 2004/207722 describes imaging apparatus with communication function, image data storing method and computer program. A method is described in which a portion of an image corresponding to a person is extracted and displayed. Then, using an image recognition unit, other images stored in memory showing the same person are retrieved and displayed in an album format.

EP 1229496 describes an information terminal apparatus and authenticating system. In one authentication method, a face image is compared to a previously registered face and control of a cellular phone is allowed if comparison is successful.

EP 0944019 describes a technique for identifying or recognizing an input face image. A profile database stores a number of face images and face feature data and person-identifying data associated with each face image. When a face image is captured by a camera, a face analysis system extracts face feature data from the captured face image and searches the profile database for similar face feature data. Person-identifying data associated with similar face feature data is retrieved.

EP 1860853 describes a technique for linking a downloaded or captured image to private information of a user stored in a telephone directory. EP1432226 describes a technique for automatically creating an email using an email address connected with a stored image that most closely matches an image captured by a camera. EP1916588 describes a technique for performing face authentication in a portable terminal. JP 2006165821 describes a technique for retrieving personal information corresponding to a person recognised in an image captured by a camera.

### SUMMARY OF THE INVENTION

The present invention has been made in view of the above problems, and provides a method for performing a variety of functions in a portable terminal using image information.

In accordance with an exemplary embodiment of the present invention, the present invention provides a method for using image information in a portable terminal, comprising: recognizing a face area from an image displayed on a display unit of the portable terminal, if an image information registration to store image information comprising information regarding feature points extracted from the recognized face area is selected; analyzing image information corresponding to the recognized face area and determining whether stored image information, consistent with the analyzed image information, exists; determining, if stored image information, consistent with the analyzed image information, exists, whether user information is linked to the stored image information; displaying, if user information is linked to the stored image information, a visual object and the user information, together, on the image, the visual object indicating the face area; registering, if user information is not linked to the stored image information, user information for linking to the stored image information; and displaying the visual object and the registered user information, together, on the image, wherein registering the user information comprises: determining whether at least one of direct registration, key-word search registration, or file-name search registration, is selected.

### BRIEF DESCRIPTION OF THE DRAWINGS

The features and advantages of the present invention will become more apparent from the following detailed description in conjunction with the accompanying drawings, in which:
FIG. 1 is a schematic block diagram illustrating a portable terminal according to an embodiment of the present invention;
FIG. 2 is a flow chart describing a method for performing functions using image information in a portable terminal, according to an embodiment of the present invention;
FIG. 3 is a flow chart describing a method for acquiring image information according to an embodiment of the present invention;
FIG. 4 is a signal flow chart describing a method for performing a function using image information, according to an embodiment of the present invention;
FIG. 5 is a flow chart describing a method for registering image information according to an embodiment of the present invention;
FIG. 6 is a flow chart describing a method for registering user information according to an embodiment of the present invention;
FIG. 7 is a flow chart describing a method for managing an image folder according to an embodiment of the present invention;
FIG. 8 is a flow chart describing a method for performing functions in an image folder, according to an embodiment of the present invention;
FIG. 9 is a flow chart describing a method for setting a caller ID, according to an embodiment of the present invention;
FIG. 10 is a flow chart describing a method for performing a communication function, according to an embodiment of the present invention;
FIG. 11 is a flow chart describing a method for performing a security function, according to an embodiment of the present invention;
FIG. 12 shows a screen displaying a face area and user information, according to an embodiment of the present invention;
FIG. 13 shows a screen when an image folder is managed, according to an embodiment of the present invention;
FIG. 14 shows a screen displaying a face area when an image folder managing function is performed;
FIG. 15 shows a screen when a caller ID setting of the image folder managing function is performed, according to an embodiment of the present invention;
FIG. 16A and FIG. 16B show screens when a recognized face area is edited by one of the image folder managing functions, according to an embodiment of the present invention; and
FIG. 17 is a flow chart describing a method for registering image information when a camera function is performed, according to another embodiment of the present invention.

### DETAILED DESCRIPTION OF EXEMPLARY EMBODIMENTS

Hereinafter, exemplary embodiments of the present invention are described in detail with reference to the accompanying drawings. The same reference numbers are used throughout the drawings to refer to the same or similar parts. Detailed descriptions of well-known functions and structures incorporated herein may be omitted to avoid obscuring the subject matter of the present invention.

Prior to explaining the embodiments of the present invention, terminologies will be defined for the description below:

An 'image' refers to an image that is taken by a camera of a portable terminal or that is downloaded from the Internet and stored in the portable terminal.

A 'face area' refers to an area that contains only a face or faces in the image.

'Image information' refers to information regarding feature points, such as eyes, nose, and mouth, which are extracted from a face area and then stored, where the face area is recognized from an image by a face recognition algorithm.

'User information' refers to information that is related to a user and stored in the portable terminal. Examples of the user information are name, phone number, email address, birthday, mailing address, image, etc.

A 'caller ID' refers to a screen that allows a user to dial the other user's phone number to communicate with the other user or a screen that displays a communication request transmitted from the other user's portable terminal, such as incoming call, etc.

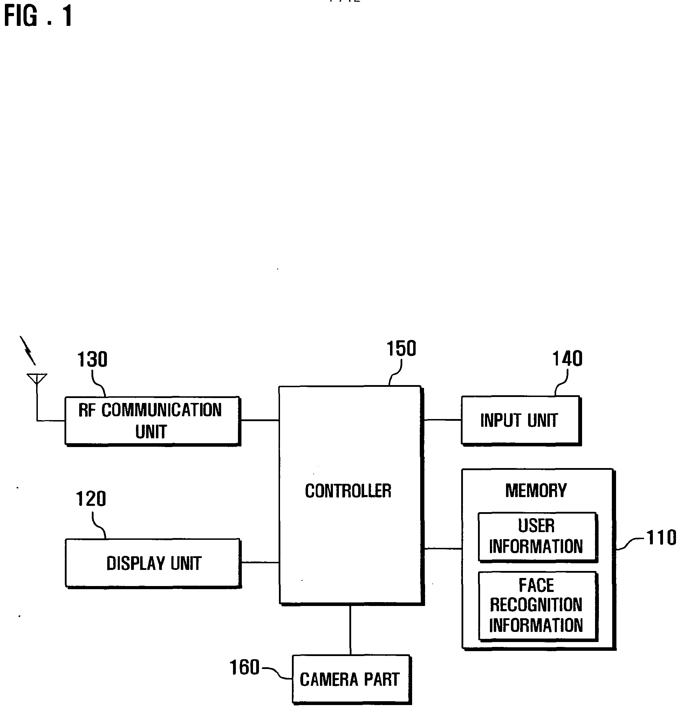

FIG. 1 is a schematic block diagram illustrating a portable terminal according to an embodiment of the present invention.

Referring to FIG. 1, the portable terminal includes a memory 110, a display unit 120, an RF communication unit 130, an input unit 140, a controller 150, and a camera part 160.

The memory 110 stores various programs for controlling operations of the portable terminal and a variety of information generated while the portable terminal is operated. In particular, it stores user information, including information regarding images, phone numbers, names, etc., and face recognition information corresponding to a face area recognized in an image, under the control of the controller 150. When a corresponding file name is set to an image or a file name of an image is re-set, the memory 110 includes a file name corresponding to an image with tag information and then stores it, under the control of the controller 150.

The images may be images, taken by a camera and stored, transmitted from the other portable terminal, or downloaded via the Internet, etc. The face recognition information may include image information corresponding to a particular point in a face area, for example, features, i.e., the eyes, the nose, and the mouth. The face recognition information may also include information regarding the position and size of a face area recognized in the entire image, information regarding the rate of the recognized face area to screen sizes, and other information. Furthermore, the face recognition information may include link information regarding user information, which is linked to a face area recognized in an image. The link information refers to information indicating a location where user information, linked to a face area based on images, is stored.

The display unit 120 displays a variety of information related to states and operations of the portable terminal. When a face recognizing function is performed according to the control of the controller 150, the display unit 120 displays a face area recognized in a selected image to allow a user to identify it. The display unit 120 displays the recognized face area in a frame or a diagram. In an embodiment of the present invention, the recognized face area is displayed in a rectangular frame. The display unit 120 can display user information linked to a recognized face area according to the control of the controller 150. In an embodiment of the present invention, the user information is displayed together with a name.

The RF communication unit 130 allows the portable terminal to communicate with a base station. It includes an RF transmitter for up-converting the frequency of signals to be transmitted and amplifying the signals transmitted and an RF receiver for low-noise amplifying received RF signals and down-converting the frequency of the received RF signals. It also includes a duplexer for isolating the RF receiver from the RF transmitter while permitting communication. If user information linked to a face area in an image is selected under the control of the controller 150, the RF communication unit 130 can make a voice or video call or transmit a message, using the selected user information. The RF communication unit 130 may further include a digital broadcast receiver to receive digital broadcast data, which is not shown.

The input unit 140 receives numerical and character information from a user. It also receives signals related to the setting of a variety of functions and to the function control of the portable terminal. It outputs the information and signals to the controller 150. It may be implemented with a touch screen or key board. It includes a variety of keys, such as character keys with numerical, function keys for selecting corresponding functions, soft keys, etc.

The controller 150 controls the entire operation and state of parts in the portable terminal. When an image information registering function is selected via the input unit 140, the controller 150 controls the display unit 120 to display one of the images, selected by a user, where examples of the images are taken by the camera part 160, stored in the memory 110, or downloaded from other terminals or the Internet. The controller 150 can recognize a face area from the displayed image using a face recognition algorithm. The controller 150 analyzes the recognized face area, extracts image information, and stores the extracted image information in the memory 110. The controller 150 detects whether user information, linked to a face area corresponding to the analyzed image information, exists. If the controller 150 ascertains that user information corresponding to the image information exists, it controls the display unit 120 to display the recognized face area and the user information together.

The face recognition algorithm can be implemented with various methods, such as, principal component analysis (PCA), fisher discriminant analysis (FDA), independent component analysis, etc. The principal component analysis (PCA) serves to extract an area corresponding to the entire face, called an Eigen Face, from the entire image space. The fisher discriminant analysis (FDA) compares a recognized face area with a stored face area and extracts a local feature of the face. The independent component analysis classifies facial characteristics in the recognized entire face area and compares the classified facial characteristics with the stored face areas.

The controller 150 performs various functions using image information. If a particular face area is selected from the face area displayed in an image, the controller 150 identifies user information linked to the selected face area. After that, the controller 150 performs a communication function selected via the input unit 140, using the identified user information. Examples of the communication function are a voice call, a video call, message transmission, etc. The message transmission allows for transmitting a short message service (SMS) message, a multimedia message service (MMS) message, an instant message, an email, etc.

The controller 150 performs a security function using image information. Examples of the security function are power on/off limitation of the portable terminal, a private life protection, a limitation of a particular function use, etc. For example, it is assumed that a pay-per-view limitation function in the DMB function is set. When a pay-per-view channel is selected via the input unit 140 while the DMB function is performing, the controller 150 determines whether the security function is set. If the controller 150 ascertains that the security function is set, it controls the camera part 160 to recognize the face from the acquired image. The controller 150 analyzes the recognized face area from the image and extracts image information therefrom. After that, the controller 150 compares image information stored in the memory 110 with image information corresponding to the recognized face area. If the controller 150 ascertains that the extracted information is consistent with the image information stored in the memory 110, it controls the RF communication unit 130 to receive broadcast data from the pay-per-view channel and displays them on the display unit 120.

The controller 150 can manage images stored in the memory 110 using image information. It recognizes a face area included in an image and determines whether user information corresponding to the recognized face area exists. It also classifies images by users, groups, set folders, etc., and displays them on the display unit 120. For example, if there are face areas corresponding to three people in an image, the controller 150 extracts image information regarding face areas, respectively. After that, the controller 150 compares the extracted image information with the image information stored in the memory 110. If the controller 150 ascertains that the extracted image information is consistent with the stored image information, it determines whether user information linked to the stored image information exists.

If the controller 150 ascertains that user information linked to the image information exists, it can classify images according to user information corresponding to respective face areas, by users, groups set in a phone book, and folders. If user information corresponding to a face area does not exist, the controller 150 classifies the images as unknown, and displays them on the display unit 120.

The controller 150 controls the memory 110 to store a recognized face area as a 'caller ID.' When a caller ID setting is selected via the input unit 140, the controller 150 identifies a face area, intended to be set as a caller ID, and user information. The controller 150 crops only the face area selected from the image, matches the cropped face area with the selected user information and stores them in the memory 110. The controller 150 controls the memory 110 to store a position and size of the cropped face area and information regarding the ratio of the cropped face area to the entire screen size. The controller 150 can adjust the size of the cropped face area, based on sizes of a screen displaying face areas, according to information regarding a ratio of screen size, and displays the cropped face area on the display unit 120.

The controller 150 recognizes face areas of respective people from an image and extracts image information corresponding to the recognized face areas. It compares the extracted image information with image information stored in the memory 110. It identifies pieces of linked user information, based on pieces of stored image information that are consistent with pieces of extracted image information, respectively. It controls the display unit 120 to display pieces of user information linked to respective face areas. If at least one face area of the recognized face areas is selected and then a particular function, such as a communication function, is selected via the input unit 140, the controller 150 can perform the selected particular function using user information linked to the selected face area. In an embodiment of the present invention, the user information is implemented with a phone number.

The camera part 160 captures images under the control of the controller 150. The camera part 160 includes a camera sensor for converting an optical signal into an analog image signal and a signal processor for converting the analog image signal of the camera sensor into digital data. The camera sensor is implemented with a CCD sensor. The signal processor is implemented with a digital signal processor (DSP). The camera sensor and the signal processor may be integrally or separately implemented.

The controller 150 controls the display unit 120 to display images that are output from the camera part 160 or stored in the memory 110. When a face recognizing function is selected via the input unit 140 or menu, the controller 150 recognizes a face area from the displayed image. The controller 150 analyzes the recognized face area and extracts image information therefrom. The controller 150 searches for user information corresponding to the extracted image information from the memory 110 and displays the recognized face area and the searched user information with an image. When a communication function execution is selected via the input unit 140 while the recognized face area and the user information are displayed, the controller 150 controls the RF communication unit 130 to conduct a communication function using the user information. The controller 150 classifies images stored in the memory 11, using image information stored in the memory 110 and user information linked to the image information, and then re-stores them therein. The controller 150 controls the display unit 120 to display images, classified through image information and user information.

In the following description, a method for performing functions using image information in a portable terminal will be explained with reference to drawings.

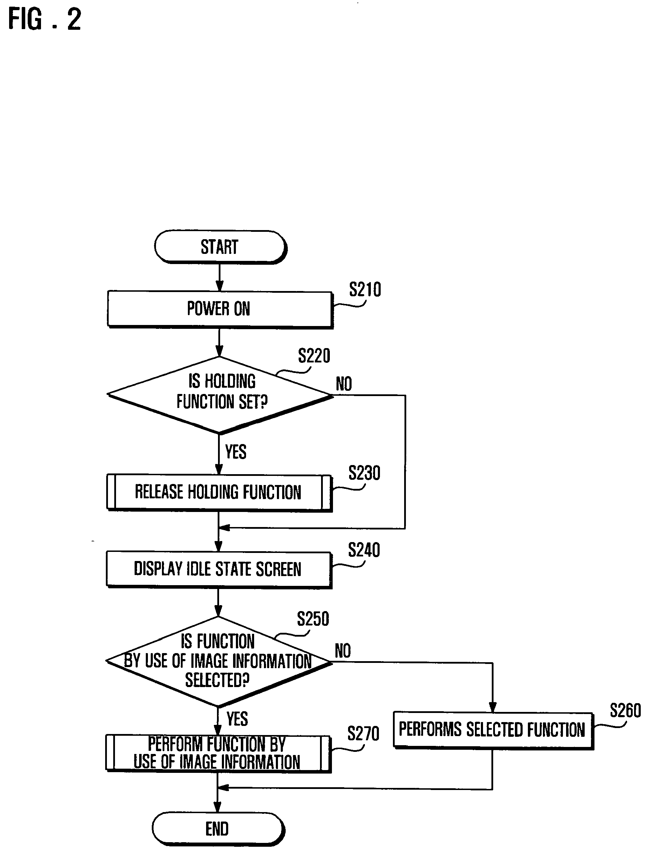

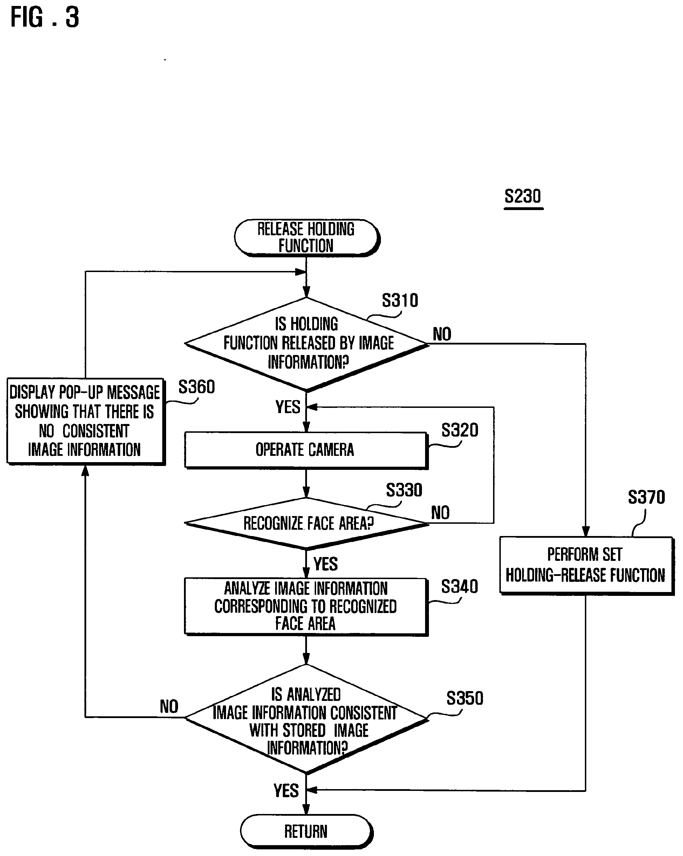

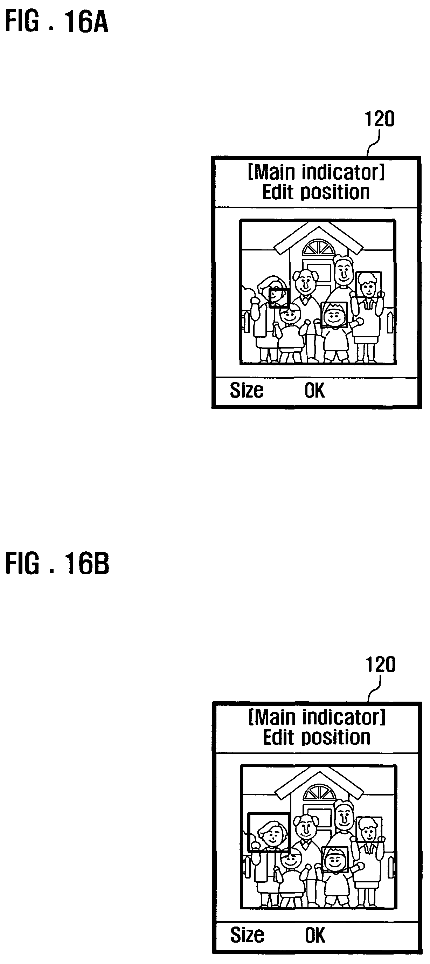

FIG. 2 is a flow chart describing a method for performing functions using image information in a portable terminal, according to an embodiment of the present invention. The flow chart of FIG. 2 is explained referring to FIG. 3 to FIGS. 16A and 16B.

Referring FIG. 2, when a power key is enabled to the input unit 140 of a portable terminal in a turn off state, the controller 150 supplies power to parts of the portable terminal (S210). Next the controller 150 determines whether a holding function is set (S220). If the controller 150 ascertains that a holding function is not set at S220, it controls the display unit 120 to display an idle state screen (S240).

On the contrary, if the controller 150 ascertains that a holding function is set at S220, it releases a holding function (S230). S230 is explained in detail, as follows, with reference to FIG. 3.

FIG. 3 is a flow chart describing a method for acquiring image information according to an embodiment of the present invention.

Referring to FIG. 3, the controller 150 determines whether a holding-release function, released by image information, is set (S310). The controller 150 ascertains that a function for releasing other holding-release functions, instead of the holding-release function released by image information, is set at S310, it performs the set holding-release function (S370). Examples of the set holding-release function may be password inputting or a holding-release function released by voice recognition.

On the contrary, if the controller 150 ascertains that a holding-release function released by image information is set at S310, it controls the camera part 160 so that it drives a camera to capture an image (S320). The controller 150 determines whether to recognize a face area from the captured image (S330). When the controller 150 ascertains that a face area is recognized from the captured image at S330, it analyzes image information corresponding to the recognized face area (S340). The controller 150 compares the analyzed image information with image information stored in the memory 110 and determines whether there is stored image information consistent with the analyzed image information (S350).

If the controller 150 ascertains that the stored image information is not consistent with the analyzed image information at S350, it displays a pop-up message showing that there is no image information to meet the analyzed image information on the display unit 120 (S360) and then proceeds with S310. The controller 150 can control the display unit 120 to display a selection window through which a user can further select re-recognition with respect to a face area.

On the contrary, if the controller 150 ascertains that the stored image information is consistent with the analyzed image information at S350, it returns to S240 in the flow chart of FIG. 2 and displays an idle state screen on the display unit 120. The controller 150 calculates the similarity between the analyzed image information and the stored image information and may further perform a holding-release function according to the calculated similarity. For example, if the calculated similarity is over 70%, the controller 150 performs a holding-release function. On the contrary, if the similarity is over 30%, the controller 150 displays a password input window for receiving a password, etc., on the display unit 120 to perform a holding-release function as a password is input to the input unit 140 or requests to re-recognize image information.

After releasing the holding-release function and displaying an idle state screen, the controller 150 determines whether to select a function by use of image information via the input unit 140 (S250). If the controller 150 ascertains that another function instead of a function using image information is selected via the input unit 140 at S250, it performs the selected function (S260). The selected function may include all types of functions, executed in the portable terminal, for example, a communication function by inputting a phone number, a camera function taking an image, a schedule managing function, etc.

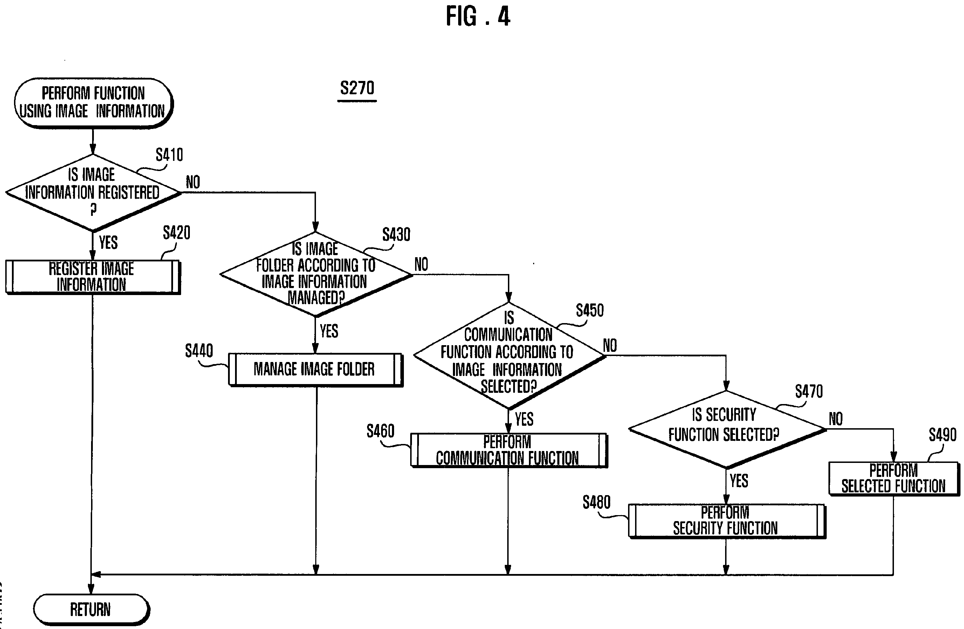

On the contrary, if the controller 150 ascertains that a function by user of image information is selected at S250, it performs the selected function (S270). S270 is explained in detail, as follows, with reference FIG. 4.

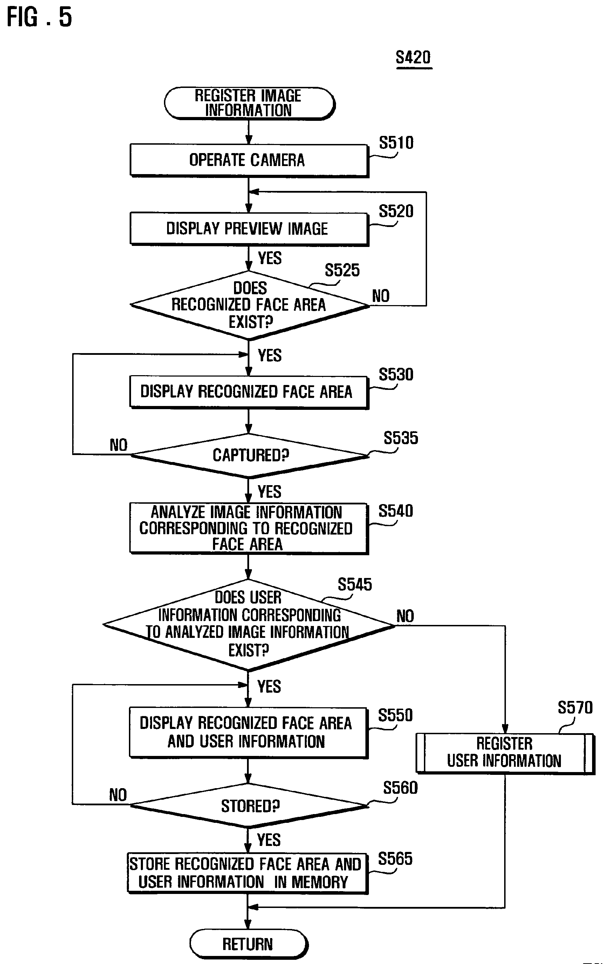

FIG. 4 is a signal flow chart describing a method for performing a function using image information, according to an embodiment of the present invention. The flow chart of FIG. 4 is explained with reference to FIG. 5 to FIG. 11.

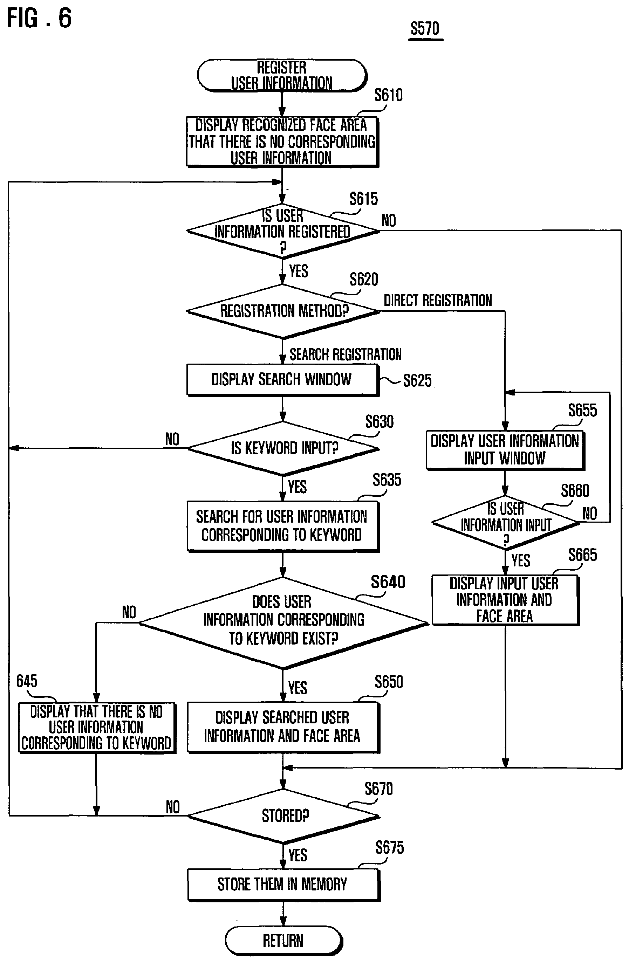

Referring to FIG. 4, the controller 150 determines whether a function using the selected image information is to register image information (S410). If an image information registration function is selected via a menu or function keys, etc., the controller 150 performs an image information registering function (S420). S420 is explained in detail, as follows, with reference to FIG. 5 and FIG. 6.

FIG. 5 is a flow chart describing a method for registering image information according to an embodiment of the present invention.

Referring to FIG. 5, when an image information registration function is selected via the input unit 140, the controller 150 operates the camera part 160 (S510). The controller 150 displays a preview image, input via the camera part 160, on the display unit 120 (S520) and determines whether a face area exists in the displayed preview image (S525). If the controller 150 ascertains that a face area does not exist in the displayed preview image at S525, it returns to and proceeds with S520, where a preview image, input via the camera part 160, is displayed on the display unit 120.

The embodiment of the present invention is implemented in such a way that, if an image information registration function is selected via the input unit 140, the controller 150 operates the camera part 160 and recognizes a face area from the input image. It should be, however, understood that the present invention is not limited to the embodiment. For example, the embodiment may be modified in such a way that, if a camera function is selected to operate the camera part 160 and thus a face recognizing function is also selected via function keys or a call key in the input unit 140, the controller 150 detects the selected function and thus recognizes a face area from the image that is input through the camera part 160.

When a face area is recognized from the image at S525, the controller 150 controls the display unit 120 to display the recognized face area in a frame or a figure so that a user can identify the recognized face area (S530). After that, the controller 150 determines whether an image capture is selected via the input unit 140 (S535). If an OK key or a photographing key is input via the input unit 140, the controller 150 analyzes image information corresponding to the recognized face area (S540).

The controller 150 determines whether the analyzed image information has corresponding user information (S545). More specifically, the controller 150 compares the analyzed image information with image information stored in the memory 110. If there is stored image information that is similar to or consistent with the analyzed image information, the controller 150 ascertains that there is user information linked to stored image information.

If the analyzed image information has corresponding user information at 545, the controller 150 controls the display unit 120 to display the recognized face area, the user information, and the captured image (S550). After that, the controller 150 determines whether a save key is selected (S560). If an OK key or a save key is input via the input unit 140, the controller 150 controls the memory 110 to store image information corresponding to the recognized face area, link information regarding a location where the user information linked to the image information and the user information linked to the face area, and an image, and then returns to the flow chart of FIG. 4. As such, the controller 150 can perform a variety of functions in the portable terminal using stored image information and user information.

On the contrary, if the analyzed image information does not have corresponding user information at 545, the controller 150 performs a user information registration according to a user's selection (S570). S570 is explained in detail, as follows, with reference to FIG. 6.

FIG. 6 is a flow chart describing a method for registering user information according to an embodiment of the present invention.

Referring to FIG. 6, the controller 150 controls the display unit 120 to display the recognized face area and a message that the analyzed image information does not have corresponding user information (S610). The controller 150 determines whether a user information registration is selected via the input unit 140 (S615). At this stage, the controller 150 may display user information on a face area that is recognized as "unknown."

When a user information registration has been selected at S615, the controller 150 determines whether the selection is a search registration or a direct registration (S620). That is, if a user information registration is selected by a menu or a function key, the controller 150 displays a selection window to allow a user to select a search registration or a direct registration.

When the user selects a user information search registration via the input unit 140 at S620, the controller 150 displays a user information search window on the display unit 120 (S625). After that, the controller 150 determines whether a key word is input to the search window (S630). If the controller 150 ascertains that a key word is input to the search window at S630, it searches for user information corresponding to the key word from user information stored in the memory 110 (S635). The controller 150 determines whether user information corresponding to the key word exists (S640). Examples of the user information searching method using a key word may be a searching method by inputting names, a method for searching user information by groups, etc.

When the controller 150 ascertains that user information corresponding to the key word does not exist at S640, it displays that user information corresponding to the key word does not exist (S645) and then returns to S615. At this stage, the controller 150 may display a user information re-registration selecting window.

On the contrary, when the controller 150 ascertains that user information corresponding to the key word exists at S640, it displays an image that is linked with the face area and the searched user information (S650). After that, the controller 150 determines whether a storing key is selected via the input unit 140 (S670).

Meanwhile, when the user selects a user information direct registration via a menu or a function at S620, the controller 150 displays a user information input window on the display unit 120 (S655). The controller 150 determines whether user information is input (S660). For example, if the user inputs user information, such as a person's name corresponding to the recognized face area, and then operates an OK key or an enter key, the controller 150 concludes that user information has been input.

When the user information has been input at S660, the controller 150 links the input user information to image information corresponding to the recognized face area (S665). After that, the controller 150 controls the display unit 120 to display the input user information, the recognized face area, and an image and then determines whether a storing key is selected via the input unit 140 at S670.

When a storing key is selected at S670, the controller 150 includes link information corresponding to user information, linked to image information corresponding to the recognized face area , with face recognition information and then stores it in the memory 110 (S675). It also includes the image with data and then stores it in the memory 110 at S675. After that, the controller 150 returns to the flow chart of FIG. 4.

In an embodiment of the present invention, user information is registered by a search registration and a direct registration. It should be, however, understood that the present invention is not limited to the embodiment. Other than those methods, the present invention can be implemented in such a way that user information is registered by a file name used to store an image. That is, if file names are input to the input unit 140 to store images and then a face recognition function is selected, the controller 150 detects the face recognition selection and recognizes a face area contained in the image. After that, the controller 150 analyzes image information corresponding to the recognized face area and then compares the file name for storing the image with user information by groups or users, stored in the memory 110. When the controller 150 identifies user information consistent with the file name, it links the identified user information to the analyzed image information and controls the display unit 120 to display the recognized face area and the identified user information on the image.

In order to store the newly analyzed image information, the controller 150 may delete image information that was stored by users. The controller 150 can also collect previously stored image information and the newly analyzed image information according to users corresponding to image information and then store it.

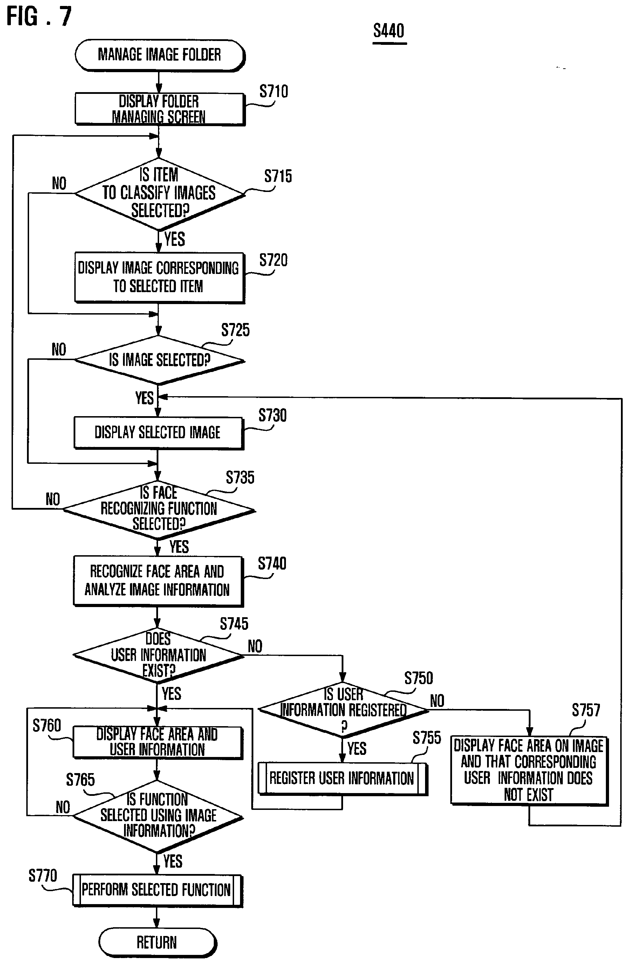

Referring back to S410 in the flow chart of FIG. 4, if an image information registration function is not selected, the controller 150 determines whether an image folder management function according to image information is selected (S430). When the controller 150 ascertains that an image folder management function is selected via a menu or a function at S430, it performs an image folder management function (S440). S440 is explained in detail, as follows, with reference to FIG. 7 to FIG. 9.

FIG. 7 is a flow chart describing a method for managing an image folder according to an embodiment of the present invention.

Referring to FIG. 7, when an image folder management (function) has been selected via the input unit 140 at S430, the controller 150 displays a folder management screen on the display unit 120 (S710). The display unit 120 separately displays an area for displaying an image, a filtering area for classifying images by item, and a menu selection area for selecting a menu, an OK key, etc. The filtering area displays item for classifying images. Examples of the item are a person, group, folder, etc.

The controller 150 determines whether at least one of the items for classifying images is selected in the filtering area (S715). If a user selects the filtering area and then an item in the selected filtering area using direction keys via the input unit 140 at S715, the controller 150 classifies images corresponding to the selected item and displays them in the image displaying area (S720). Examples of the items to be filtered are a user, group, set folder, etc. When an image of a plurality of face areas is filtered and displayed or the plurality of face areas or a user corresponding to each of the face areas is selected, in the image display area, the controller 150 can display the other images including the selected user or the group.

Next, the controller 150 determines whether a particular image is selected from the displayed image (S725). If a user selects a particular image using direction keys, etc., via the input unit 140 at S725, the controller 150 displays the selected image on the image displaying area (S730). After that, the controller 150 determines whether a face recognition function is selected (S735). The selection of the face recognition function is determined by operating the menu or the function keys, etc. In particular, if a call key is operated while an image is being displayed on the display unit 120, the controller 150 may regard the input of call key as a signal to select a face recognition function.

When a face recognition function has been selected by operating the menu or function keys, etc. at S735, the controller 150 analyzes image information via a face area included in the image (S740). The controller 150 determines whether user information linked to the analyzed image information exists (S745). If the controller 150 ascertains that user information linked to the analyzed image information does not exist at S745, it determines whether a user information registration is selected (S750). If the controller 150 ascertains that a user information registration is selected at S750, it registers user information (S755) and then displays the face area and the user information on the image (S760). S755 is performed as the flow chart of FIG. 6. On the contrary, if the controller 150 ascertains that a user information registration is not selected at S750, it displays the face area and a message that there is no user information corresponding to the recognized face area on the image (S757) and then returns to and proceeds with S730 to re-display the selected image.

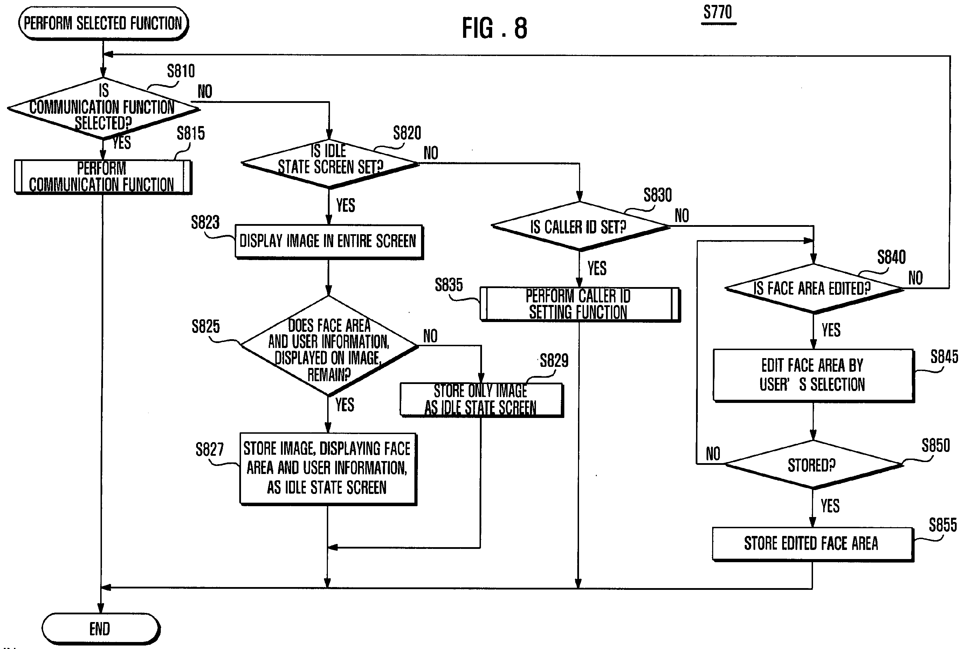

Meanwhile, if the controller 150 ascertains that user information linked to the analyzed image information exists at S745, it displays the face area and the user information on the image at 760. After that, the controller 150 determines whether an image information use function is selected (S765). Examples of the image information use function are communication, an idle state screen setting, a caller ID setting, a face area editing, etc. If a user selects a menu, the controller 150 controls the display unit 120 to display functions, which can be performed using image information, on a list. If a particular function in a list is selected via the input unit 140 at S765, the controller 150 performs the selected function (S770). S770 is explained in detail, as follows, with reference to FIG. 8.

FIG. 8 is a flow chart describing a method for performing functions in an image folder, according to an embodiment of the present invention.

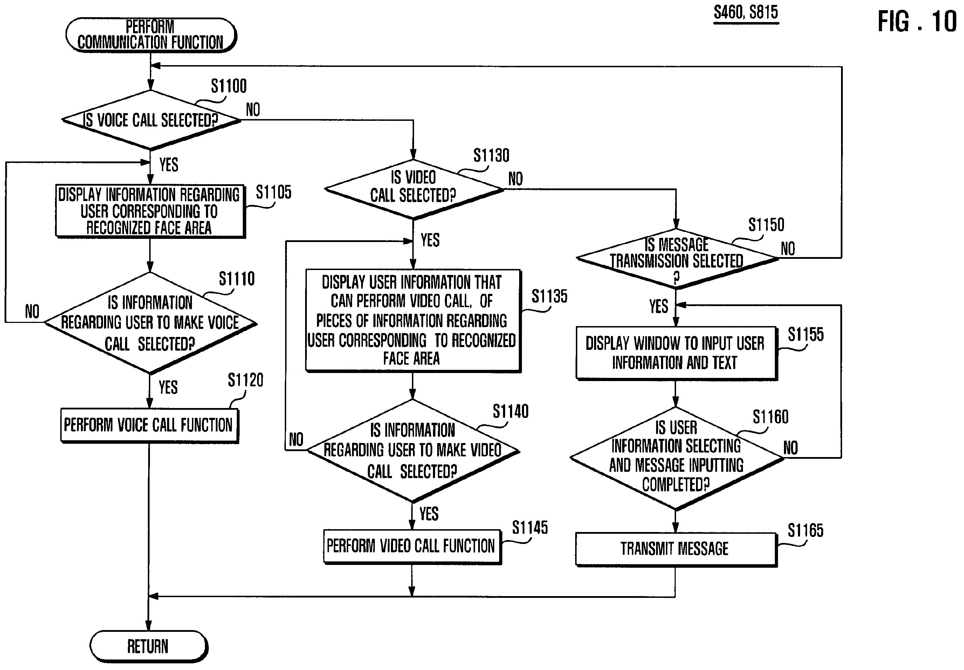

Referring to FIG. 8, after displaying the face area, the user information, and the image, the controller 150 determines whether a communication function is selected (S810). If the controller 150 ascertains that a communication function is selected at S810, it performs the communication function, selected via the input unit 140, using the displayed user information (S815). S815 will be explained in detail, later, with reference to FIG. 10.

On the contrary, if the controller 150 ascertains that a communication function is not selected at S810, it determines whether an idle state screen setting is selected (S820). If an idle state screen setting is selected via the input unit 140 at S820, the controller 150 magnifies the displayed image to be displayed in the entire screen (S823). After that, the controller 150 displays a selection window to determine whether to continue to display the face area and the user information, linked to the image. Next, the controller 150 determines whether to select to continue to display the user information and the face area (S825).

If the continuation of displaying the user information and the face area has been selected at S825, the controller 150 stores the image displaying the user information and the face area with an idle state screen (S827). On the contrary, if the continuation of displaying the user information and the face area has not been selected at S825, the controller 150 removes the user information and the face area and sets only the image to an idle state screen (S829).

The controller 150 can perform various functions, such as communication, etc., using user information displayed in the image that is set to an idle state screen by a user's selection. To do this, the user edits images, which include face areas of others whom the user frequently contacts, to a single image and then sets it to an idle state screen. In that case, the controller 150 recognizes the others' face areas included in the set idle state screen, links each of the recognized face areas to corresponding user information, and stores them.

If a face area and a communication function are selected in an idle state screen including face areas to which a plurality of pieces of user information are linked, the controller 150 can perform a communication function using the user information linked to the selected face area. When an idle state screen is set by an image that includes a face area and user information, if a cancel or termination key is input, the controller 150 can delete the displayed image and display the originally set idle state screen. If an OK key or a call key is pressed for a relatively long period via the input unit 140 during the display of an idle state screen, the controller 150 detects the key input operation and displays an image as an idle state screen, which includes a face area to which previously selected user information is linked, on the display unit 120.

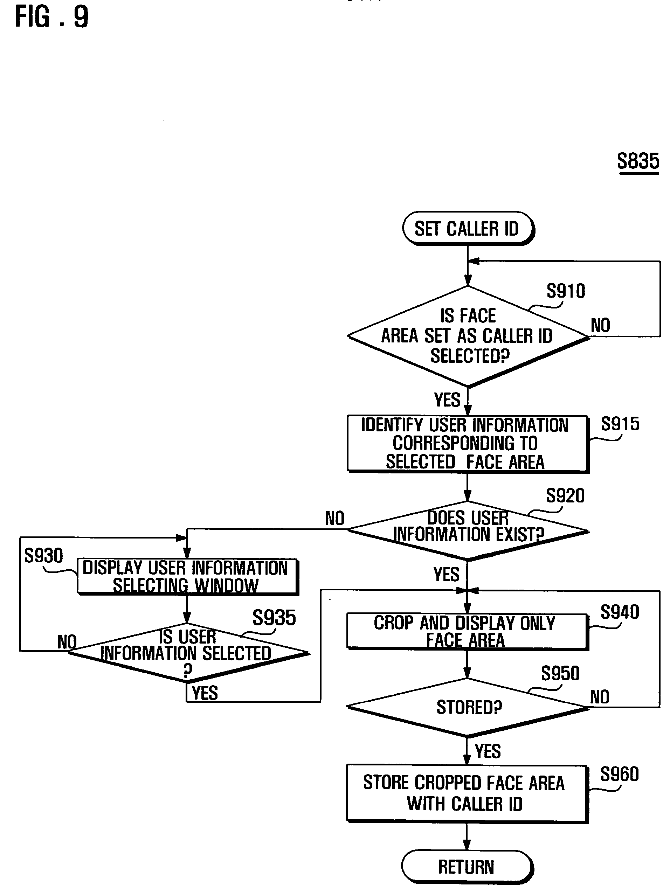

On the contrary, if an idle state screen setting is not selected via the input unit 140 at S820, the controller 150 determines whether a caller ID setting is selected (S830). If the controller 150 ascertains that a caller ID setting is selected at S830, it performs a caller ID setting function (S835). S835 is explained in detail, as follows, with reference to FIG. 9.

FIG. 9 is a flow chart describing a method for setting a caller ID, according to an embodiment of the present invention.

Referring to FIG. 9, the controller 150 determines whether a face area set to a caller ID is selected (S910). If a user selects a face area using direction keys of the input unit 140 at S910, the controller 150 identifies user information linked to the selected face area from user information stored in the memory 110 (S915).

Next, the controller 150 determines whether identified user information exists (S920). If the controller 150 ascertains that identified user information does not exist at S920, it displays a user information selecting window on the display unit 120 (S930). The user information selecting window may display a user's name, phone number, e-mail address, etc. like a phone number. The user information selecting window can also be displayed with an input window for inputting a key word. After that, the controller 150 determines whether user information is selected (S935). If user information is selected via the input unit 140 or by inputting a key word at S935, the controller 150 identifies the selected user information. After that, the controller 150 crops only the selected face area and displays it on the display unit 120 (S940). In addition, when user information corresponding to the face area exists at S920, the controller 150 also crops only the selected face area and displays it on the display unit 120 at S940.

Next, the controller 150 determines whether a storing function is selected (S950). If a storing function is selected via the input unit 140, the controller 150 controls the memory 110 to store the cropped face area, matching the user information, as a caller ID (S960).

Referring back to S830 in the flow chart of FIG. 8, when the controller 150 ascertains that a caller ID setting is not selected at S830, the controller 150 determines whether a face area editing is selected (S840). The face area editing function allows a user to edit the range of the recognized face area if the size of recognized face area is not correctly recognized, if the position deviated from the original face area is recognized as a face area, and if a face area, which actually exists, is not recognized.

When the face area editing function has been selected at S840, the controller 150 edits the face area according to a user's selection (S845). That is, when a face area editing function is selected by the menu or function keys, etc., the controller 150 displays a selection window for selecting editing methods, such as size edit, position edit, face area addition (face area manually setting), etc., so that the user can select the editing methods for the face area. The controller 150 can edit the face area according to a user's selected editing method. In an embodiment of the present invention, the face area editing method is used to edit the size and position of the recognized face area.

For example, if the size of a face area included in an image is properly recognized, the face area editing method is performed as follows. When a face area size editing is selected via the input unit 140, the controller 150 identifies a frame displaying the selected face area to edit the face area. The controller 150 adjusts size of the identified frame according to a user's input direction keys. It is assumed that frame size is magnified by the right direction key and reduced by the left direction key. Therefore, when the right direction key is pressed, the controller 150 magnifies size of the frame. Similarly, when the left direction key is pressed, the controller 150 reduces size of the frame.

If a face area manually setting is selected, the controller 150 displays a frame, which can display a face area, on the display unit 120. When the position and size of the frame are selected via the input unit 140, the controller 150 regards the area where the frame is located as a face area. After that, the controller 150 analyzes image information corresponding to the area where the frame is located.

If the user selects a face area to be edited and then an editing method via the input unit 140, the controller 150 can edit the selected face area by the selected editing method. For example, if the user selects a face area to be edited via the input unit 140 and then selects an editing method by a menu, the controller 150 edits the selected face area using the selected editing method and then stores it.

After completing the face area edit, the controller 150 determines whether a storing function is selected (S850). If the controller 150 ascertains that a storming function is selected at S850, it re-recognizes the face area included in the edited frame and then stores it (S855) and then returns to the flow chart of FIG. 4.

Referring back to S430 in the flow chart of FIG. 4, when the controller 150 ascertains that an image folder management function is not selected via a menu or a function at S430, it determines whether a communication function according to image information is selected (S450). If the controller 150 ascertains that a communication function according to image information is selected at S450, it performs a communication function (S460). S460 is explained in detail, as follows, with reference to FIG. 10.

FIG. 10 is a flow chart describing a method for performing a communication function, according to an embodiment of the present invention.

Referring to FIG. 10, the controller 150 determines whether a voice call function is selected (S1100). If an image showing a face area and user information is displayed and a menu is selected in the menu input area, the controller 150 displays a selection window for selecting voice and video call functions, and a message transmission function. The controller 150 determines whether one of the voice and video call functions and the message transmission function, displayed on the selection window, is selected.

In an embodiment of the present invention, the controller 150 performs a communication function using a face area and user information, displayed on the image. For example, if there is an image having user information corresponding to a face area, recognized as an idle state screen, the controller 150 can perform a voice call, a video call, a message transmission, etc., using user information selected by a user.

When the display unit 120 displays an image including at least one face area to which user information is linked while an image display function that displays at least one image stored in the memory 110 is performed, the controller 150 can perform a communication function using user information linked to a face area that is selected by the user.

When a voice call function is selected at S1100, the controller 150 controls the display unit 120 to display a list of user information corresponding to the recognized face area (S1105). The list of user information includes a user's name and phone number. After that, the controller 150 determines whether user information to perform a voice call is selected (S1110). If the controller 150 ascertains that user information to perform a voice call is selected at S1110, it controls the RF communication unit 130 to perform a voice call with the other person's portable terminal corresponding to the selected user information (S1120).

On the contrary, when a voice call function is not selected at S1100, the controller 150 determines whether a video call function is selected (S1130). If the controller 150 ascertains that a video call function is selected at S1130, it displays user information regarding a user who can make a video call, from user information corresponding to the recognized face area (S1135). The controller 150 determines whether user information regarding a user who makes a video call is selected (S1140). Similar to the process of displaying user information regarding a user who makes a voice call, the user's name and phone number can be displayed on the display unit 120. If user information regarding a user who makes a video call is selected at S1140, the controller 150 controls the RF communication unit 130 to make a video call with the other's portable terminal corresponding to the selected user information (S1145).

On the contrary, when the controller 150 ascertains that a video call function is not selected at S1130, it determines whether a message transmission function is selected (S1150). If a message transmission function is selected at S1150, the controller 150 controls the display unit 120 to display user information and text input window (S1155). For example, under the control of the controller 150, the display unit 120 can display a user information selection window for displaying pieces of user information included in the image and a text input window for inputting a message. The user information may include names, phone numbers, or e-mail addresses.

The controller 150 determines whether user information has been selected and a message has been input (S1160). If a user selects user information regarding the other user to whom the user transmits a message, inputs a message, and then operates a menu key or an OK key, the controller 150 controls the RF communication unit 130 to transmit a message to the portable terminal of the other user corresponding to the user information (s1165). After performing a communication function, the controller 150 proceeds to the flow chart of FIG. 4.

Although the embodiment of the present invention is implemented in such a way that, if a communication function is selected, the controller 150 displays user information, linked to an image, and performs a communication function using user information selected from the displayed user information. It should be, however, understood that the present invention is not limited to the embodiment. For example, the present invention can be implemented in such a way that, if a particular face area is selected from a face area displayed on an image via the input unit 140 and then a communication function is selected, the controller 150 can perform a communication function using user information corresponding to the selected face area.

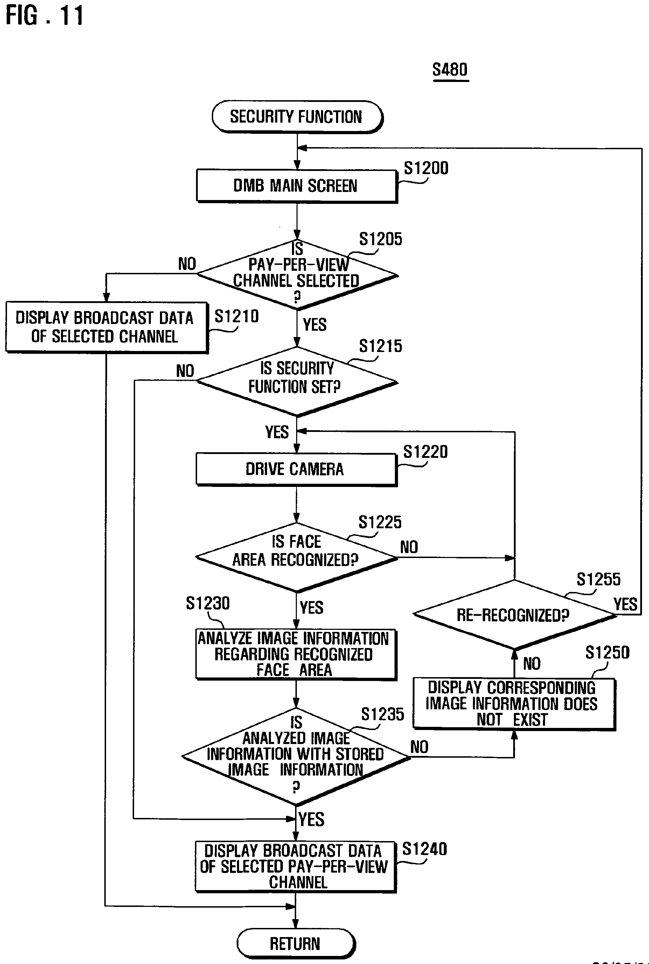

Referring back to S450 in the flow chart of FIG. 4, when the controller 150 ascertains that a communication function according to image information is not selected at S450, it determines whether a security function is selected (S470). If a security function is selected via the input unit 140 at S470, the controller 150 performs a security function (S480). S480 is explained in detail, as follows, with reference to FIG. 11.

FIG. 11 is a flow chart describing a method for performing a security function, according to an embodiment of the present invention.

The security function is set to protect functions that a user does not wish to share with other users and can be set to all functions, performed in a portable terminal, such as an image folder management function, an outgoing call restriction function, a log data ascertaining function, an electronic planner function (a schedule management, memo, etc.), a phone book function, etc. In an embodiment of the present invention, it is assumed that the security function is set to restrict viewing a pay-per-view channel when a DMB function is performed in a portable terminal.

Referring to FIG. 11, when a DBM function is selected via the input unit 140, the controller 150 displays a DMB main screen on the display unit 120 (S1200). The DMB main screen displays a list of channels to select and view digital broadcast and menus to select a DMB function.

After that, the controller 150 determines whether a pay-per-view channel is selected (S1205). If the controller 150 ascertains that a pay-per-view channel has not been selected at S1205, it controls the display unit 120 to display broadcast data received via a channel that is selected via the input unit 140 (S1210).

On the contrary, if a pay-per-view channel has been selected at S1205, the controller 150 determines whether a security function is set to restrict the viewing of a pay-per-view channel (S1215). If the controller 150 ascertains that a security function has been set at S1215, it operates the camera part 160 to acquire an image (S1220). The controller 150 determines whether a face area is recognized from an image input via the camera part 160 (S1225). If a face area has been recognized from an image at S1225, the controller 150 analyzes image information of the recognized face area (S1230). After that, the controller 150 determines whether the analyzed image information is consistent with image information stored in the memory 110 (S1235).

If the controller 150 ascertains that the analyzed image information is consistent with stored image information at S1235, it controls the display unit 120 to display broadcast data received via the selected pay-per-view channel (S1240). On the contrary, if the analyzed image information is not consistent with stored image information at S1235, the controller 150 displays a message that there is no corresponding image information (S1250). It can also display a pop-up message that the viewing of a pay-per-view channel is restricted on the display unit 120.

Next, the controller 150 determines whether a face area re-recognition is selected (S1225). That is, after displaying that there is no corresponding image information at S1250, the controller 150 displays a selection window for selecting whether to re-recognize a face area. When a face area re-recognition is selected via the input unit 140 at S1255, the controller 150 returns to and proceeds with S1220 to recognize a face area again. If a face area re-recognition is not selected at S1255, the controller 150 returns to and proceeds with S1200.

In an embodiment of the present invention, it is explained that image information is used to perform a security function of the DMB function. It should be, however, understood that the image information can be also used to perform a security function of a private life protection function, an outgoing call restriction function, etc. For example, if a user inputs a phone number via the input unit 140 and then a call key, the controller 150 detects that an outgoing call restriction function is set. If an outgoing call restriction function is set, the controller 150 recognizes a face area from an image input via the camera part 160 and then analyzes image information. Next, the controller 150 determines whether the analyzed image information is consistent with information stored in the memory 110. If the analyzed image information and stored image information are consistent with each other, the controller 150 makes a call using the phone number and communicates via the RF communication unit 130 with the other user's portable terminal corresponding to the dialed phone number.

Meanwhile, if the controller 150 ascertains that a security function has not been set at S1215, it proceeds with S1240.

Referring back to S470 in the flow chart of FIG. 4, when the controller 150 ascertains that a security function is not selected via the input unit 140 at S470, it performs functions selected via a menu or function keys, etc. (S490). Examples of the functions include all functions that can be performed in a conventional portable terminal.

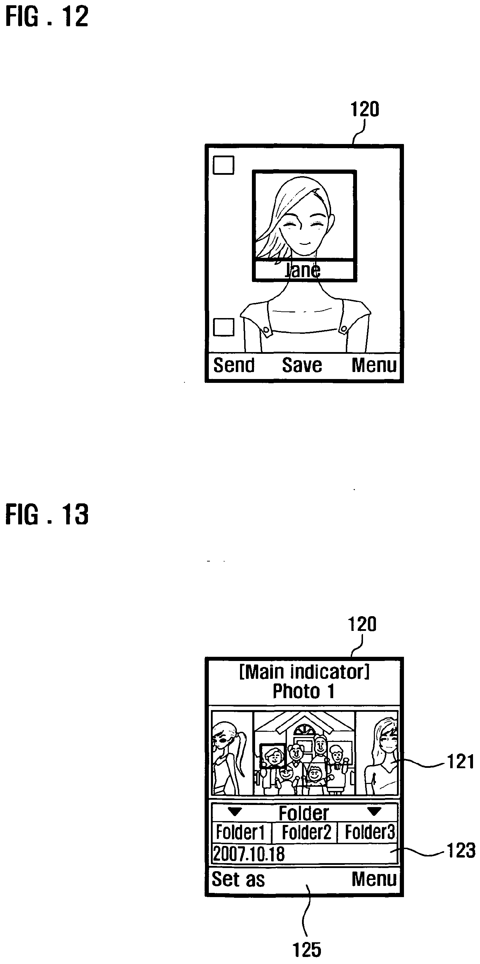

In the following description, examples of screens displayed on the display unit 120 are explained when respective functions are performed using image information, with reference to FIG. 12 to FIG. 16 and FIG. 16B.

FIG. 12 shows a screen displaying a face area and user information, according to an embodiment of the present invention.

As shown in FIG. 12, the display unit 120 shows a screen when a face area recognition function is selected, regarding an image input via the camera, etc., or an image stored in the memory 110. That is, when an image is displayed on the display unit 120 and a user inputs a call or function key, the controller 150 recognizes a face area from the displayed image. The controller 150 analyzes image information from the recognized face area and identifies user information corresponding to the analyzed image information. After that, the controller 150 controls the display unit 120 to display the identified user information and the recognized face area as shown in FIG. 12. In embodiment of the present invention, although the user information and the recognized face area are displayed in a rectangular frame, it should be understood that they can be shown in various manners according to a user's setting or the portable terminal manufacturers' setting.

FIG. 13 shows a screen when an image folder is managed, according to an embodiment of the present invention.

As shown in FIG. 13, when an image folder management function is selected via a menu or function key, the controller 150 controls the display unit 120 to separately display an area for displaying an image, a filtering area, and an area for selecting menu. The filtering area classifies images by folders, people, and groups.

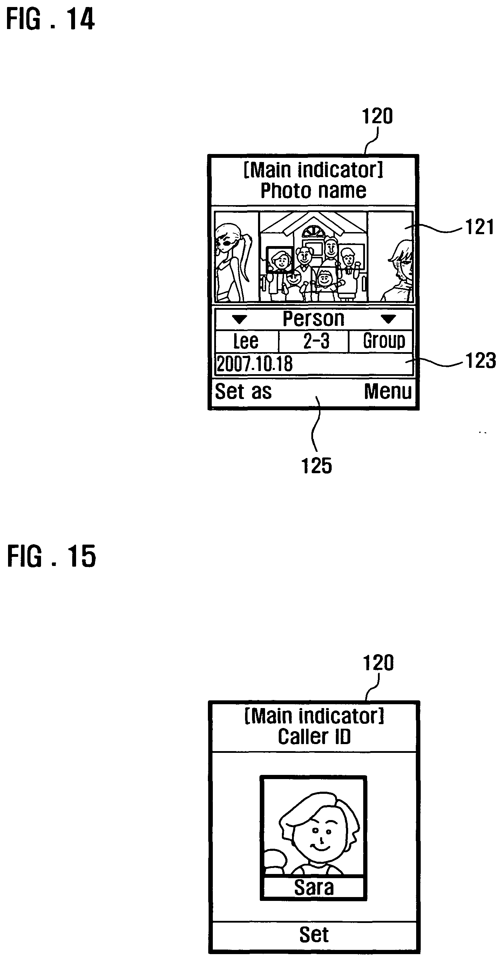

FIG. 14 shows a screen executing a face recognition function with respect to an image displayed in an image display area when an image folder managing function is performed.

As shown in FIG. 14, the display unit 120 displays an image selected by an image folder management function. When a face recognition function is selected via a call or function key of the input unit 140, the controller 150 recognizes a face area included in an image and then displays it in the image display area.

FIG. 15 shows a screen when a caller ID setting of the image folder managing function is performed, according to an embodiment of the present invention.

As shown in FIG. 15, when a face area to be used as a caller ID is selected from an image via the input unit 140 and then the caller ID setting is selected by a menu or function key, the controller 150 crops the selected face area and then displays it on the display unit 120. After that, the controller 150 can store the cropped face area and user information corresponding to the recognized face area, as a caller ID.

FIG. 16A and FIG. 16B show screens when a recognized face area is edited by one of the image folder managing functions, according to an embodiment of the present invention.

As shown in FIG. 16A, if the recognized face area is smaller than the original face area or the face area is mistaken to recognize its position, a user selects the face area that the user wishes to edit using the direction keys and then select a face area editing function via a menu or function key. In that case, the controller 150 detects the operation, identifies the selected face area, and corrects the size and position of the frame on the face area, based on the user's selection, as shown in FIG. 16B.

As described above, the method according to the present invention can perform functions selected via the input unit 140 of the portable terminal using image information if a face area is recognized from an image displayed on the display unit 120 and the recognized face area includes user information linked thereto. Other than that, while the display unit 120 is displaying an image, input when a camera function is performed, or an image stored in the memory 110, if a user selects a face recognition function via the input unit 140, the controller 150 recognizes only a face area from the displayed image, analyzes image information corresponding to the recognized face area, links user information corresponding to the analyzed image information to the recognized face area, and displays the recognized face area and user information in the image displayed on the display unit 120.

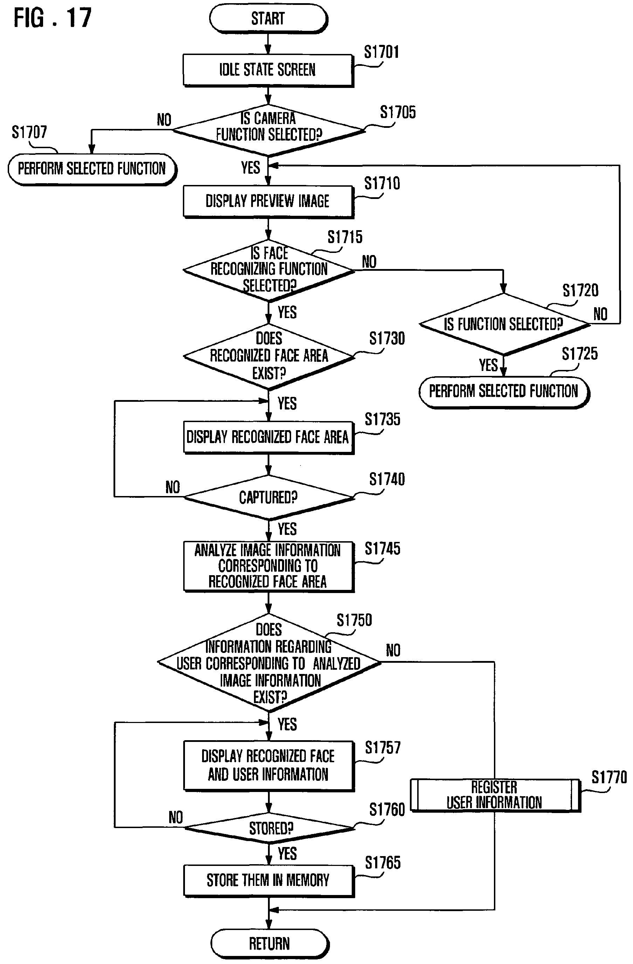

FIG. 17 is a flow chart describing a method for registering image information when a camera function is performed, according to another embodiment of the present invention.

Referring to FIG. 17, when the portable terminal is operated in a standby mode (S1701), the controller 150 determines whether a camera function is selected (S1705). If a user selects other functions instead of a camera function at S1705, the controller 150 performs the selected function (S1707).

On the contrary, if a camera function is selected via the input unit 140 at S1705, the controller 150 operates the camera part 160 and displays a preview image input therethrough (S1710). After that, the controller 150 determines whether an image information registration function is selected (S1715). If an image information registration function is not selected via the input unit 140 at S1715, the controller 150 determines whether to select other functions (S1720). If the controller 150 ascertains that a function is selected via the input unit 140 at S1720, it performs the selected function (S1725). The other functions include functions that can be performed when a camera function is performed, such as capturing an image, camera preference settings, etc.

If an image information registration function is selected via a menu and a function key, or by inputting a call key at S1715, the controller 150 determines whether a face area is recognized from the displayed preview image (S1730).

Since steps S1735 to S1770 in the flow chart of FIG. 17 are the same as S530 to S570 in the flow chart of FIG. 5, their detailed description is omitted. Briefly, the controller 150 recognizes a face area and analyzes image information corresponding to the recognized face area. The controller 150 identifies user information according to the analyzed image information and links it to the analyzed image information. After that, the controller 150 displays the user information, linked to the analyzed image information, and the face area on the image. If user information corresponding to the analyzed image information does exist, the controller 150 may register user information corresponding to image information according to a user's selection.

In an embodiment of the present invention, image information is registered when the camera part 160 captures an image. It should be, however, understood that the present invention is not limited to the embodiment. For example, image information can also be registered when the controller 150 stores an image, captured according to a user's selection, in the memory 110 and displays the stored image. That is, the controller 150 stores an image, captured in a camera function, and then displays the stored image. When a face area recognition function is selected via the input unit 140, the controller 150 recognizes the face area from the image and analyzes image information corresponding to the recognized face area. After that, the controller 150 links the analyzed image information to user information and displays it. The controller 150 may also store link information regarding the user information linked to the analyzed image information, as well as an image, in the memory 110.

When the controller 150 controls the display unit 120 to displays images downloaded from the other external terminals or the Internet, etc., it can also perform a face recognition function according to a user's selection and register image information. For example, when a user selects a downloaded image via the input unit 140, the controller 150 displays the selected, downloaded image on the display unit 120. After that, when a face recognition function is selected by a call key, a menu, or a function key, the controller 150 recognizes a face area from the downloaded image. Next, the controller 150 identifies and displays image information, corresponding to the recognized face area, and user information. The controller 150 can further store the image, image information, and user information in the memory 110.

In an embodiment of the present invention, if a face area recognition function is selected in an image folder management function, the controller 150 displays the face area and user information on the selected image. When the image folder management function is selected, the controller 150 identifies an image including user information and image information corresponding to a face area from the memory 110 and then controls the display unit 120 to displays the image, the identified user information, and the face area, together. The image folder management function may include functions for displaying images downloaded via external terminals or the Internet, images captured by the camera part 160, and images stored in the memory 110.

As described above, embodiments of the present invention provide a method for performing a variety of functions, such as communication of a portable terminal, using image information acquired through a face recognition algorithm. For example, a method for using image information according to the present invention can allow a user to identify names, addresses, etc., of the other persons contained in an image through image information stored in a portable terminal and to perform communication and image folder management using the image information.

## Claims

1. A method for using image information in a portable terminal, comprising:
recognizing (S330) a face area from an image displayed on a display unit (120) of the portable terminal, if an image information registration to store image information comprising information regarding feature points extracted from the recognized face area is selected;
analyzing (S540) image information corresponding to the recognized face area and determining (S545) whether stored image information, consistent with the analyzed image information, exists;
determining (S545), if stored image information, consistent with the analyzed image information, exists, whether user information is linked to the stored image information;
displaying (S550), if user information is linked to the stored image information, the recognized face area and the user information, together, on the image;
registering (S570), if user information is not linked to the stored image information, user information for linking to the image information corresponding to the recognized face area; and
displaying the recognized face area and the registered user information, together, on the image,
wherein registering the user information (S570) further comprises:
determining (S620) whether at least one of direct registration wherein a user inputs user information for registration, search registration wherein user information for registration is searched using a key word input to a user information search window displayed on the display unit (120), and registration using file name wherein user information for registration is searched using a file name for storing the image, is selected; and
registering user information by the selected registration.

2. The method of claim 1, further comprising:
displaying (S655) a user information input window if the direct registration is selected; and
linking, if user information is input to the displayed user information input window, the input user information to the face area and registering it.

3. The method of claim 2, further comprising:
displaying (S625) the user information search window if the search registration is selected;
identifying (S630), if a key word is input to the user information search window, user information corresponding to the key word; and
linking, if user information corresponding to the key word exists, the searched user information to the face area and storing it.

4. The method of claim 3, further comprising:
determining, if registration using a file name for storing the image is selected, whether user information including the file name exists; and
linking, if user information including the file name is identified, the identified user information to the face area and storing it.

5. The method of claim 1, further comprising:
setting (S827) an image displaying the user information and the face area to an idle state screen.

6. The method of claim 5, further comprising:
displaying, if a communication function is selected, the user information included in the image that is set as the idle state screen; and
performing (S815) the selected communication function using user information selected from the displayed user information.

7. The method of claim 1, further comprising:
displaying (S710), if an image folder management function is selected, a folder management screen;
recognizing (S740), if a face area recognition function is selected, a face area included in an image that is displayed on the folder management screen;
displaying (S760), if user information corresponding to the recognized face area exists, the user information and the face area on the image; and
performing (S770) a function for using image information that is selected using the user information displayed on the image.

8. The method of claim 7, wherein the function using image information is one of the communicating (S825), idle state screen setting (S827), caller ID setting (S835), and face area editing (S845).

9. The method of claim 8, wherein performing a function for using image information comprises:
magnifying and displaying (S823), if the idle state screen setting function is selected, the image in the entire screen; and
setting (S827) the image displaying the user information and the face area to the idle state screen if continuing displaying the user information and the face area is selected.

10. The method of claim 7, wherein performing a function for using image information comprises:
determining (S830), if the caller ID setting function is selected, whether a face area to be set to a caller ID is selected in the image;
identifying (S915) user information corresponding to the selected face area and cropping and displaying (S940) only the face area from the image; and
matching the cropped face area with the user information and storing (S960) it as a caller ID.

11. The method of claim 1, wherein performing a function for using image information comprises:
displaying, if the face area editing function is selected, a window for selecting an editing method;
editing (S845) a face area included in the image, if the editing method is selected; and
re-recognizing and storing (S855) the edited face area.

12. The method of claim 1, further comprising:
determining (S470), if a function is selected, whether a security function is set and operating (S1220) a camera part if a security function has been set;
recognizing (S1225) a face area from an image input via the camera part;
analyzing (S1230) image information corresponding to the recognized face area and determining (S1235) whether the analyzed image information is consistent with stored image information; and
performing (S480), if the analyzed image information is consistent with stored image information, the selected function.

13. The method of claim 1, further comprising:
operating (S510) a camera part if a camera function is selected and displaying (S520) a preview image input via the camera part;
wherein the face area is recognized from the preview image.

## Patentansprüche

1. Verfahren zum Benutzen von Bildinformationen in einem tragbaren Endgerät, das Folgendes beinhaltet:
Erkennen (S330) eines Gesichtsbereichs auf einem auf einer Anzeigeeinheit (120) des tragbaren Endgeräts angezeigten Bildes, wenn eine Bildinformationsregistrierung zum Speichern von Bildinformationen gewählt ist, die Informationen über aus dem erkannten Gesichtsbereich extrahierte Merkmalspunkte beinhalten;
Analysieren (S540) von dem erkannten Gesichtsbereich entsprechenden Bildinformationen und Feststellen (S545), ob mit den analysierten Bildinformationen übereinstimmende gespeicherte Bildinformationen existieren;
Feststellen (S545), wenn mit den analysierten Bildinformationen übereinstimmende gespeicherte Bildinformationen existieren, ob Benutzerinformationen mit den gespeicherten Bildinformationen verknüpft sind;
Anzeigen (S550), wenn Benutzerinformationen mit den gespeicherten Bildinformationen verknüpft sind, des erkannten Gesichtsbereichs und der Benutzerinformationen zusammen auf dem Bild;
Registrieren (S570), wenn Benutzerinformationen nicht mit den gespeicherten Bildinformationen verknüpft sind, von Benutzerinformationen zum Verknüpfen mit den Bildinformationen entsprechend dem erkannten Gesichtsbereich; und
Anzeigen des erkannten Gesichtsbereichs und der registrierten Benutzerinformationen zusammen auf dem Bild,
wobei das Registrieren der Benutzerinformationen (S570) ferner Folgendes beinhaltet:
Feststellen (S620), ob wenigstens eine aus direkter Registrierung, bei der ein Benutzer Benutzerinformationen zur Registrierung eingibt, Suchregistrierung, bei der Benutzerinformationen zur Registrierung anhand einer Schlüsselworteingabe in ein auf der Anzeigeeinheit (120) angezeigtes Benutzerinformationssuchfenster gesucht werden, und Registrierung anhand eines Dateinamens, wobei Benutzerinformationen zur Registrierung mit einem Dateinamen zum Speichern des Bildes gesucht werden, gewählt wurde; und
Registrieren von Benutzerinformationen durch die gewählte Registrierung.

2. Verfahren nach Anspruch 1, das ferner Folgendes beinhaltet:
Anzeigen (S655) eines Benutzerinformationseingabefensters, wenn direkte Registrierung gewählt ist; und
Verknüpfen, wenn Benutzerinformationen in das angezeigte Benutzerinformationseingabefenster eingegeben werden, der eingegebenen Benutzerinformationen mit dem Gesichtsbereich und Registrieren derselben.

3. Verfahren nach Anspruch 2, das ferner Folgendes beinhaltet:
Anzeigen (S625) des Benutzerinformationssuchfensters, wenn Suchregistrierung gewählt ist;
Identifizieren (S630), wenn ein Schlüsselwort in das Benutzerinformationssuchfenster eingegeben wird, von dem Schlüsselwort entsprechenden Benutzerinformationen; und
Verknüpfen, wenn dem Schlüsselwort entsprechende Benutzerinformationen existieren, der gesuchten Benutzerinformationen mit dem Gesichtsbereich und Speichern derselben.

4. Verfahren nach Anspruch 3, das ferner Folgendes beinhaltet:
Feststellen, wenn Registrierung anhand eines Dateinamens zum Speichern des Bildes gewählt wurde, ob Benutzerinformationen einschließlich des Dateinamens existieren; und
Verknüpfen, wenn Benutzerinformationen einschließlich des Dateinamens identifiziert werden, der identifizierten Benutzerinformationen mit dem Gesichtsbereich und Speichern derselben.

5. Verfahren nach Anspruch 1, das ferner Folgendes beinhaltet:
Setzen (S827) eines die Benutzerinformationen und den Gesichtsbereich anzeigenden Bildes in einen Ruhezustandsbildschirm.

6. Verfahren nach Anspruch 5, das ferner Folgendes beinhaltet:
Anzeigen, wenn eine Kommunikationsfunktion gewählt wird, der in dem in den Ruhezustandsbildschirm gesetzten Bild enthaltenen Benutzerinformationen; und
Ausführen (S815) der gewählten Kommunikationsfunktion anhand von aus den angezeigten Benutzerinformationen ausgewählten Benutzerinformationen.

7. Verfahren nach Anspruch 1, das ferner Folgendes beinhaltet:
Anzeigen (S710), wenn eine Bildordnermanagementfunktion gewählt ist, eines Ordnermanagementbildschirms;
Erkennen (S740), wenn eine Gesichtsbereicherkennungsfunktion gewählt ist, eines in einem auf dem Ordnermanagementbildschirm angezeigten Bild enthaltenen Gesichtsbereichs;
Anzeigen (S760), wenn dem erkannten Gesichtsbereich entsprechende Benutzerinformationen existieren, der Benutzerinformationen und des Gesichtsbereichs auf dem Bild; und
Ausführen (S770) einer Funktion zum Benutzen von Bildinformationen, die anhand der auf dem Bild angezeigten Benutzerinformationen gewählt werden.

8. Verfahren nach Anspruch 7, wobei die Bildinformationen benutzende Funktion eine aus Kommunizieren (S825), Ruhezustandsbildschirm-Setzen (S827), Anrufer-ID-Setzen (S835) und Gesichtsbereichsbearbeitung (S845) ist.

9. Verfahren nach Anspruch 8, wobei das Ausführen einer Funktion zum Benutzen von Bildinformationen Folgendes beinhaltet:
Vergrößern und Anzeigen (S823), wenn die Ruhezustandsbildschirm-Setzfunktion gewählt ist, des Bildes in dem gesamten Bildschirm; und
Setzen (S827) des die Benutzerinformationen und den Gesichtsbereich anzeigenden Bildes in den Ruhezustandsbildschirm, wenn die Benutzerinformationen weiter angezeigt werden und der Gesichtsbereich gewählt ist.

10. Verfahren nach Anspruch 7, wobei das Ausführen einer Funktion zum Benutzen von Bildinformationen Folgendes beinhaltet:
Ermitteln (S830), wenn die Rufer-ID-Setzfunktion gewählt ist, ob ein auf eine Anrufer-ID zu setzender Gesichtsbereich in dem Bild gewählt ist;
Identifizieren (S915) von dem gewählten Gesichtsbereich entsprechenden Benutzerinformationen und Ausschneiden und Anzeigen (S940) nur des Gesichtsbereichs von dem Bild; und
Vergleichen des ausgeschnittenen Gesichtsbereichs mit den Benutzerinformationen und Speichern (S960) derselben als Rufer-ID.

11. Verfahren nach Anspruch 1, wobei das Ausführen einer Funktion zur Benutzung von Bildinformationen Folgendes beinhaltet:
Anzeigen, wenn die Gesichtsbereichsbearbeitungsfunktion gewählt ist, eines Fensters zum Auswählen eines Bearbeitungsverfahrens;
Bearbeiten (S845) eines in dem Bild enthaltenen Gesichtsbereichs, wenn das Bearbeitungsverfahren gewählt ist; und
erneutes Erkennen und Speichern (S855) des bearbeiteten Gesichtsbereichs.

12. Verfahren nach Anspruch 1, das ferner Folgendes beinhaltet:
Ermitteln (S470), wenn eine Funktion gewählt ist, ob eine Sicherheitsfunktion gesetzt ist, und Betätigen (S1220) eines Kamerateils, wenn eine Sicherheitsfunktion gesetzt ist;
Erkennen (S1225) eines Gesichtsbereichs von einem Eingabebild über den Kamerateil;
Analysieren (S1230) von dem erkannten Gesichtsbereich entsprechenden Bildinformationen und Feststellen (S1235), ob die analysierten Bildinformationen mit gespeicherten Bildinformationen übereinstimmen; und
Ausführen (S480) der gewählten Funktion, wenn die analysierten Bildinformationen mit gespeicherten Bildinformationen übereinstimmen.

13. Verfahren nach Anspruch 1, das ferner Folgendes beinhaltet:
Betätigen (S510) eines Kamerateils, wenn eine Kamerafunktion gewählt ist, und Anzeigen (S520) eines über den Kamerateil eingegebenen Voransichtsbildes;
wobei der Gesichtsbereich von dem Voransichtsbild erkannt wird.

## Revendications

1. Procédé pour utiliser des informations d'image dans un terminal portable, comprenant les opérations consistant à :
reconnaître (S330) une zone de visage à partir d'une image affichée sur une unité d'affichage (120) du terminal portable si un enregistrement d'informations d'image, destiné à stocker des informations d'image comprenant des informations relatives à des points caractéristiques extraits à partir de la zone de visage reconnue, est sélectionné ;
analyser (S540) des informations d'image correspondant à la zone de visage reconnue, et déterminer (S545) s'il existe des informations d'image stockées qui concordent avec les informations d'image analysées ;
s'il existe des informations d'image stockées qui concordent avec les informations d'image analysées, déterminer (S545) si des informations d'utilisateur sont liées aux informations d'image stockées ;
si des informations d'utilisateur sont liées aux informations d'image stockées, afficher (S550), la zone de visage reconnue et les informations d'utilisateur, ensemble, sur l'image ;
si des informations d'utilisateur ne sont pas liées aux informations d'image stockées, enregistrer (S570) des informations d'utilisateur pour faire un lien aux informations d'image lesquelles correspondent à la zone de visage reconnue ; et
afficher la zone de visage reconnue et les informations d'utilisateur enregistrées, ensemble, sur l'image,
cas dans lequel l'enregistrement des informations d'utilisateur (S570) comprend en outre les opérations consistant à :
déterminer (S620) si l'un au moins des enregistrements suivants est sélectionné, à savoir : un enregistrement direct où un utilisateur saisit des informations d'utilisateur en vue d'un enregistrement, un enregistrement à recherche où des informations d'utilisateur destinées à un enregistrement font l'objet d'une recherche grâce à l'utilisation d'un mot-clé introduit dans une fenêtre de recherche d'informations d'utilisateur affichée sur l'unité d'affichage (120), et un enregistrement utilisant un nom de fichier où des informations d'utilisateur destinées à un enregistrement font l'objet d'une recherche grâce à l'utilisation d'un nom de fichier pour stocker l'image ; et
enregistrer des informations d'utilisateur grâce à l'enregistrement ayant été sélectionné.

2. Procédé selon la revendication 1, comprenant en outre les opérations consistant à :
afficher (S655) une fenêtre de saisie d'informations d'utilisateur si l'enregistrement direct est sélectionné ; et
si des informations d'utilisateur sont saisies dans la fenêtre de saisie d'informations d'utilisateur ayant été affichée, lier les informations d'utilisateur saisies à la zone de visage et les enregistrer.

3. Procédé selon la revendication 2, comprenant en outre les opérations consistant à :
afficher (S625) la fenêtre de recherche d'informations si l'enregistrement à recherche est sélectionné ;
si un mot-clé est saisi dans la fenêtre de recherche d'informations d'utilisateur, identifier (S630) des informations d'utilisateur qui correspondent au mot-clé ; et
s'il existe des informations d'utilisateur correspondant au mot-clé, lier les informations d'utilisateur recherchées à la zone de visage et les stocker.

4. Procédé selon la revendication 3, comprenant en outre les opérations consistant à :
si l'enregistrement utilisant un nom de fichier pour stocker l'image est sélectionné, déterminer s'il existe des informations d'utilisateur incluant le nom de fichier ; et
si des informations d'utilisateur incluant le nom de fichier sont identifiées, lier les informations d'utilisateur identifiées à la zone de visage et les stocker.

5. Procédé selon la revendication 1, comprenant en outre les opérations consistant à :
définir (S827) une image affichant les informations d'utilisateur et la zone de visage sur un écran en état de veille.

6. Procédé selon la revendication 5, comprenant en outre les opérations consistant à :
afficher, si une fonction de communication est sélectionnée, les informations d'utilisateur incluses dans l'image qui est définie comme étant l'écran en état de veille ; et
réaliser (S815) la fonction de communication sélectionnée grâce à l'utilisation des informations d'utilisateur sélectionnées à partir des informations d'utilisateur affichées.

7. Procédé selon la revendication 1, comprenant en outre les opérations consistant à :
si une fonction de gestion de dossiers d'images est sélectionnée, afficher (S710), un écran de gestion de dossiers ;
reconnaître (S740), si une fonction de reconnaissance de zone de visage est sélectionnée, une zone de visage incluse dans une image qui est affichée sur l'écran de gestion de dossiers ;
s'il existe des informations d'utilisateur qui correspondent à la zone de visage reconnue, afficher (S760) les informations d'utilisateur et la zone de visage sur l'image ; et
réaliser (S770) une fonction pour utiliser des informations d'image qui est sélectionnée grâce à l'utilisation des informations d'utilisateur affichées sur l'image.

8. Procédé selon la revendication 7, la fonction utilisant des informations d'image étant l'un des éléments suivants, à savoir : communication (S825), définition de l'écran en état de veille (S827), définition de l'ID de l'appelant (S835), et édition de la zone de visage (S845).

9. Procédé selon la revendication 8, la réalisation d'une fonction pour utiliser des informations d'image comprenant les opérations consistant à :
si la fonction de définition de l'écran en état de veille est sélectionnée, agrandir et afficher (S823) l'image dans l'écran entier ; et
définir (S827) l'image affichant les informations d'utilisateur et la zone de visage sur l'écran en état de veille si la continuation de l'affichage des informations d'utilisateur et de la zone de visage est sélectionnée.

10. Procédé selon la revendication 7, la réalisation d'une fonction pour utiliser des informations d'image comprenant les opérations consistant à :
déterminer (S830), si la fonction de définition de l'ID de l'appelant est sélectionnée, si une zone de visage devant être définie pour une ID d'appelant, est sélectionnée dans l'image ;
identifier (S915) des informations d'utilisateur qui correspondent à la zone de visage sélectionnée, et rogner et afficher (S940) uniquement la zone de visage à partir de l'image ; et
assortir la zone de visage rognée aux informations d'utilisateur et les stocker (S960) en tant qu'ID de l'appelant.

11. Procédé selon la revendication 1, la réalisation d'une fonction pour utiliser des informations d'image comprenant les opérations consistant à :
afficher, si la fonction d'édition de la zone de visage est sélectionnées, une fenêtre pour sélectionner un procédé d'édition ;
éditer (S845) une zone de visage incluse dans l'image, si le procédé d'édition est sélectionné ; et
effectuer une re-reconnaissance et stocker (S855) la zone de visage éditée.

12. Procédé selon la revendication 1, comprenant en outre les opérations consistant à :
déterminer (S470), si une fonction est sélectionnée, si une fonction de sécurité est définie, et opérer (S1220) une partie caméra si une fonction de sécurité a été définie ;
reconnaître (S1225) une zone de visage à partir d'une image saisie par l'intermédiaire de la partie caméra ;
analyser (S1230) des informations d'image correspondant à la zone de visage reconnue, et déterminer (S1235) si les informations d'image analysées concordent avec des informations d'image stockées ; et
si les informations d'image analysées concordent avec des informations d'image stockées, réaliser (S480) la fonction sélectionnée.

13. Procédé selon la revendication 1, comprenant en outre les opérations consistant à :
opérer (S510) une partie caméra si une fonction caméra est sélectionnée, et afficher (S520) une image de prévisualisation saisie par l'intermédiaire de la partie caméra ;
cas dans lequel la zone de visage est reconnue à partir de l'image de prévisualisation.
